# FASCICULE DE BREVET EUROPEEN

(11) **EP 2 672 335 B1**
(45) Date de publication et mention de la délivrance du brevet: **02.11.2016**
(21) Numéro de dépôt: 12170705.3
(22) Date de dépôt: 04.06.2012
(51) Int. Cl.: G04B 35/00, G04B 13/02, F16H 55/16

(54) **Roue à denture flexible**
Flexibles Zahnrad
Flexible gear

(43) Date de publication de la demande: 11.12.2013
(73) Titulaire: Omega SA, 2502 Bienne (CH)
(72) Inventeur: Klinger, Laurent, 2503 Bienne (CH); Kraehenbuehl, David Benjamin, 2540 Grenchen (CH); Stöckli, Thomas, 4571 Lüterkofen (CH)
(74) Mandataire: Giraud, Eric

(56) Documents cités:
- EP-A1- 1 380 772
- EP-A1- 1 555 584
- EP-A1- 2 003 522
- EP-A1- 2 112 567
- WO-A1-2010/063393
- WO-A2-2009/114477
- DE-A1-102004 037 540
- DE-U1-202011 101 577

## Description

### Domaine de l'invention

L'invention concerne une roue d'horlogerie comportant des dents à rattrapage de jeu comportant chacune un ergot saillant d'un pied d'ergot, et une lame élastique saillante d'un pied de lame en regard dudit ergot dont elle est séparée par une encoche ventrale et dont un profil d'intrados du côté opposé audit ergot délimite une encoche dorsale, ledit pied de lame étant délimité, vers l'axe de pivotement de ladite roue, par une extrémité interne de ladite encoche ventrale et par une extrémité interne de ladite encoche dorsale.

L'invention concerne encore un rouage d'horlogerie comportant au moins une telle roue.

L'invention concerne encore un mouvement d'horlogerie comportant au moins un tel rouage.

L'invention concerne encore une pièce d'horlogerie comportant au moins un tel mouvement d'horlogerie, ou/et au moins un tel rouage.

L'invention concerne le domaine des mécanismes d'horlogerie ou d'appareillage scientifique de mesure comportant un rouage.

### Arrière-plan de l'invention

La fabrication de rouages d'horlogerie avec des engrenages sans ébat est délicate, car il s'agit de rendre compatibles, d'une part une transmission optimale de couple avec le meilleur rendement possible, et d'autre part une bonne résistance aux chocs.

La solution d'une denture flexible, avec chaque dent comportant une partie rigide et une partie élastique répond bien au problème de transmission d'énergie, mais moins bien au problème de résistance aux chocs. Et ceci d'autant plus que de telles dentures flexibles sont conçues généralement pour être réalisées en matériau micro-usinable, en silicium ou similaire, par un procédé « LIGA » ou similaire. Le document EP 2 112 567 A1 au nom de Rolex décrit un engrenage à compensation de jeu comportant une roue avec des parties élastiques flexibles ainsi fabriquées.

### Résumé de l'invention

L'invention se propose de définir une géométrie de roue flexible, réalisable dans un matériau micro-usinable, en silicium ou similaire, par un procédé « LIGA » ou similaire, et répondant bien aux deux problèmes posés : rendement et résistance aux chocs.

A cet effet, l'invention concerne une roue d'horlogerie comportant des dents à rattrapage de jeu comportant chacune un ergot saillant d'un pied d'ergot, et une lame élastique saillante d'un pied de lame en regard dudit ergot dont elle est séparée par une encoche ventrale, un profil d'intrados de ladite lame du côté opposé audit ergot délimitant une encoche dorsale, ledit pied de lame étant délimité, vers l'axe de pivotement de ladite roue, par une extrémité interne de ladite encoche ventrale et par une extrémité interne de ladite encoche dorsale, caractérisée en ce que ladite extrémité interne de ladite encoche dorsale est située plus près dudit axe que ladite extrémité interne de ladite encoche ventrale, et s'étend, du côté dudit axe, sous ledit pied d'ergot ou sous le prolongement géométrique interne de ladite encoche ventrale vers ledit axe de pivotement.

L'invention concerne encore un rouage d'horlogerie comportant au moins une telle roue, caractérisé en ce que ladite roue coopère en engrènement avec un pignon antagoniste dont les dents comportent une zone de section maximale agencée pour coopérer en appui d'entraînement avec une partie externe, sensiblement radiale par rapport audit axe de pivotement de ladite roue, d'un dit ergot ou d'une dite lame.

L'invention concerne encore un mouvement d'horlogerie comportant au moins un tel rouage.

L'invention concerne encore une pièce d'horlogerie comportant au moins un tel mouvement d'horlogerie, ou/et au moins un tel rouage.

### Description sommaire des dessins

D'autres caractéristiques et avantages de l'invention apparaîtront à la lecture de la description détaillée qui va suivre, en référence aux dessins annexés, où :
- la figure 1 représente, de façon schématisée et en vue en plan, une roue à denture flexible selon une première variante de réalisation de l'invention ;

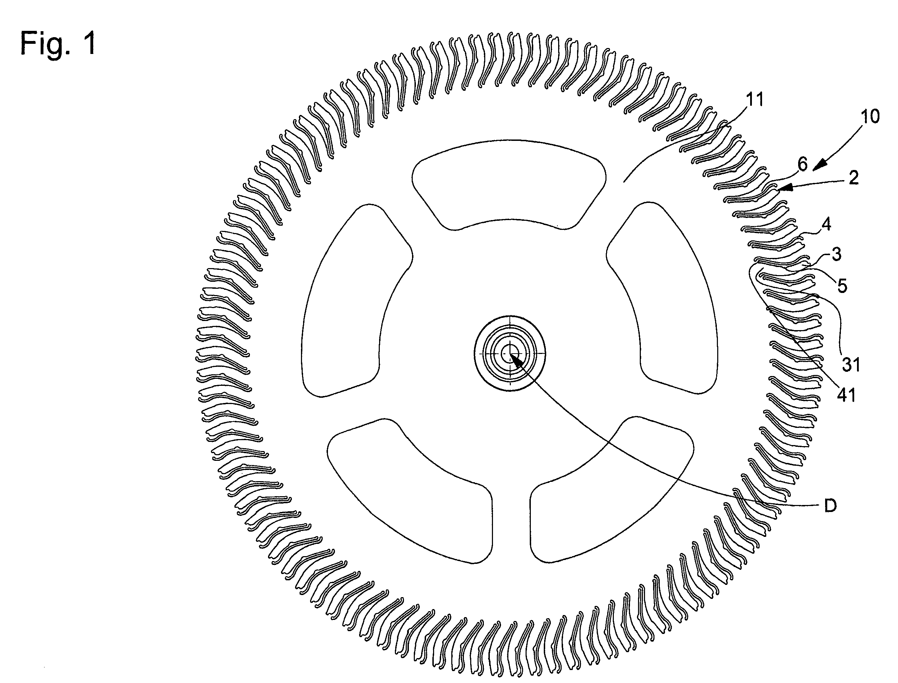

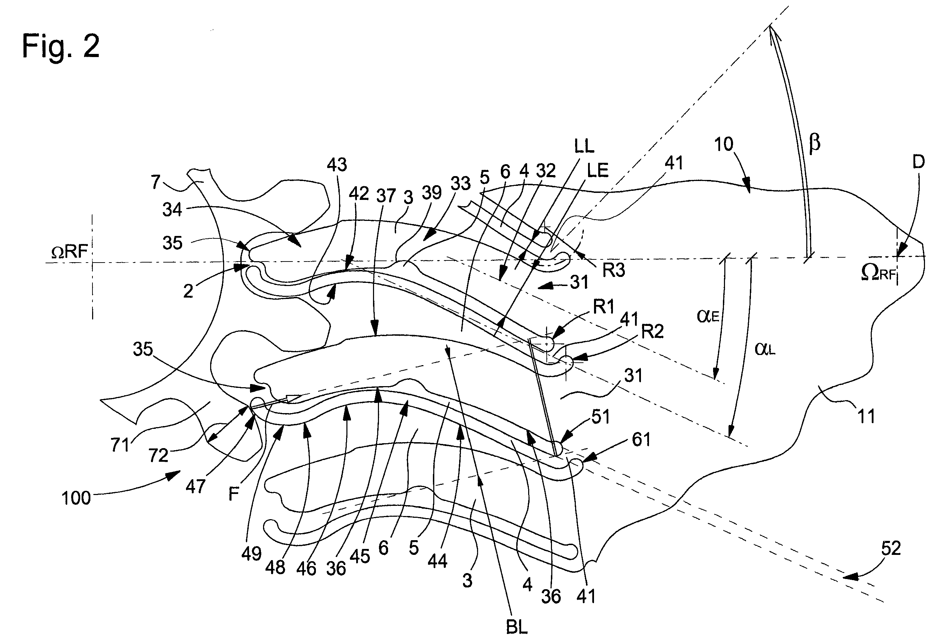

- la figure 2 représente, de façon schématisée et en vue en plan, un détail de la zone d'engrènement d'un rouage comportant une roue selon la figure 1, et un pignon rigide antagoniste, où, sur une première dent, un ergot et une lame sont en contact l'un avec l'autre, tandis que sur une deuxième dent, l'ergot et la lame correspondants sont encore à distance l'un de l'autre, une flèche symbolise l'effort appliqué par une dent du pignon rigide sur la lame flexible de cette deuxième dent, et un double trait fait apparaître le bras de levier sur lequel s'exerce cette force de poussée, en vertu de la configuration particulière de cette lame flexible entourée par des encoches selon une délimitation particulière et propre à l'invention ;
- la figure 3 est une représentation similaire à la figure 2, dans une autre variante de réalisation de l'invention, et dans une autre position relative entre le pignon rigide et la roue flexible, dans laquelle aucune lame ne porte sur un des ergots ;
- la figure 4 représente, de façon schématisée et en vue en plan, un détail d'extrémité d'un secteur constitutif d'une roue selon la variante de la figure 3, comportant un tel ergot et une telle lame ;
- la figure 5 représente, de façon schématisée et en vue en plan, les différents rayons fonctionnels des constituants de l'invention ;
- la figure 6 représente, de façon schématisée et en vue en plan, un pignon rigide conçu pour coopérer avec une roue flexible selon la figure 1 ;
- la figure 7 représente, de façon schématisée et en vue en plan, un détail de la périphérie d'une roue flexible selon l'invention, dans une autre variante que celles illustrées sur les figures précédentes, et dans laquelle l'extrémité interne d'une encoche dorsale est située entre l'axe de pivotement de la roue et le pied d'un ergot voisin ;
- la figure 8 représente, de façon schématisée et en vue en plan, un détail de l'extrémité interne des encoches dorsale et ventrale de la roue de la figure 1, tandis que la figure 9 représente une configuration différente qui est moins favorable que celle de la figure 8 ;
- la figure 10 représente, sous forme d'un schéma-blocs, une pièce d'horlogerie comprenant un mouvement comprenant lui-même un rouage comportant une roue flexible selon l'invention.

### Description détaillée des modes de réalisation préférés

L'invention concerne le domaine des mécanismes d'horlogerie ou d'appareillage scientifique de mesure comportant un rouage.

L'invention se propose de définir une géométrie de roue flexible, réalisable dans un matériau micro-usinable, en silicium ou similaire, par un procédé « LIGA » ou similaire, et assurant à la fois un bon rendement et une bonne résistance aux chocs.

Il s'agit d'améliorer la tenue d'une telle denture flexible, en respectant les limitations imposées par le procédé de fabrication. En effet, pour assurer une résistance suffisante de lames flexibles, ou, tout simplement de dents, d'une roue fabriquée en matériau micro-usinable et inscrite dans une planche, il est nécessaire, entre autres contraintes non détaillées ici, de respecter un rapport d'aspect minimal, c'est-à-dire une largeur minimale des parties pleines ou des parties creuses, par rapport à l'épaisseur de la planche. Ce rapport d'aspect est usuellement compris entre 5 et 10, d'autant plus facile à produire qu'il est proche de 5. Ce rapport d'aspect vaut aussi bien pour les parties pleines, comme des lames élastiques, que pour des parties vides, fentes ou encoches. Les angles vifs rentrants sont proscrits, tout particulièrement en fond de fentes ou d'encoches. De façon générale, un rayon de courbure minimal est à respecter pour toute partie de la géométrie de la pièce.

Ainsi l'invention concerne une roue 10 d'horlogerie comportant des dents 2 à rattrapage de jeu. Chaque dent 2 comporte un ergot 3 saillant d'un pied d'ergot 31, et une lame élastique 4 saillante d'un pied de lame 41 en regard de cet ergot 3, dont elle est séparée par une encoche ventrale 5. Cette lame 4 comporte un profil d'intrados 43 du côté opposé à cet ergot 3, ce profil d'intrados 43 délimite une encoche dorsale 6. Le pied de lame 41 est délimité, vers l'axe de pivotement D de la roue 10, par une extrémité interne 51 de l'encoche ventrale 5 et par une extrémité interne 61 de l'encoche dorsale 6.

Selon l'invention, l'extrémité interne 61 de l'encoche dorsale 6 est située plus près de l'axe D que l'extrémité interne 51, et s'étend, du côté de cet axe D, sous ce pied d'ergot 31 ou sous le prolongement interne 52 de cette encoche ventrale 5 vers l'axe de pivotement D. On appelle ici «prolongement 52» uniquement le prolongement géométrique de l'encoche ventrale, représenté sur les figures par un double trait interrompu, et non un composant ni un profil particulier de la roue 10.

Plus particulièrement, cette roue 10, pour mécanisme d'horlogerie, comporte, en périphérie d'un corps de roue 11, une pluralité de dents à géométrie variable 2 à rattrapage de jeu.

Chacune de ces dents 2 comporte au moins un ergot 3 rattaché en porte-à-faux au corps de roue 11 par un pied d'ergot 31, et au moins une lame élastique 4 rattachée en porte-à-faux au corps de roue 11 par un pied de lame 41: cette lame 4 est positionnée en regard d'un tel ergot 3 dont elle est séparée par une encoche ventrale 5. La lame élastique 4 s'étend entre un profil d'extrados 42 du côté de cet ergot 3 et un profil d'intrados 43 du côté opposé à cet ergot 3. Le profil d'intrados 43 délimite une encoche dorsale 6, laquelle sépare la lame 4 du reste de la roue 10. Le pied de lame 41 est délimité, d'une part, par une extrémité interne 51 de l'encoche ventrale 5 du côté de l'axe de pivotement D de la roue 10, et d'autre part par une extrémité interne 61 de l'encoche dorsale 6.

Selon l'invention, pour autoriser, en cas de choc sur un rouage 100 auquel est incorporée la roue 10, un fléchissement de l'ergot 3, l'extrémité interne 61 de l'encoche dorsale 6 est située plus près de l'axe de pivotement D que l'extrémité interne 51 de l'encoche ventrale 5. Et l'extrémité interne 61 de l'encoche dorsale 6 s'étend, du côté de l'axe de pivotement D, sous le pied d'ergot 31 ou sous le prolongement interne 52 de l'encoche ventrale 5 vers l'axe de pivotement D.

En effet, les contraintes de réalisation d'une telle roue 10 en matériau micro-usinable obligent à concevoir les encoches ventrales 5, comme les encoches dorsales 6, rayonnées à leurs extrémités internes, respectivement 51 et 61. La valeur minimale Rmin1 de ce rayon d'extrémité est définie par la nature du matériau et l'épaisseur de la planche. De la même façon, la valeur Rmin2 de tout rayon de courbure est aussi définie par la nature du matériau et l'épaisseur de la planche.

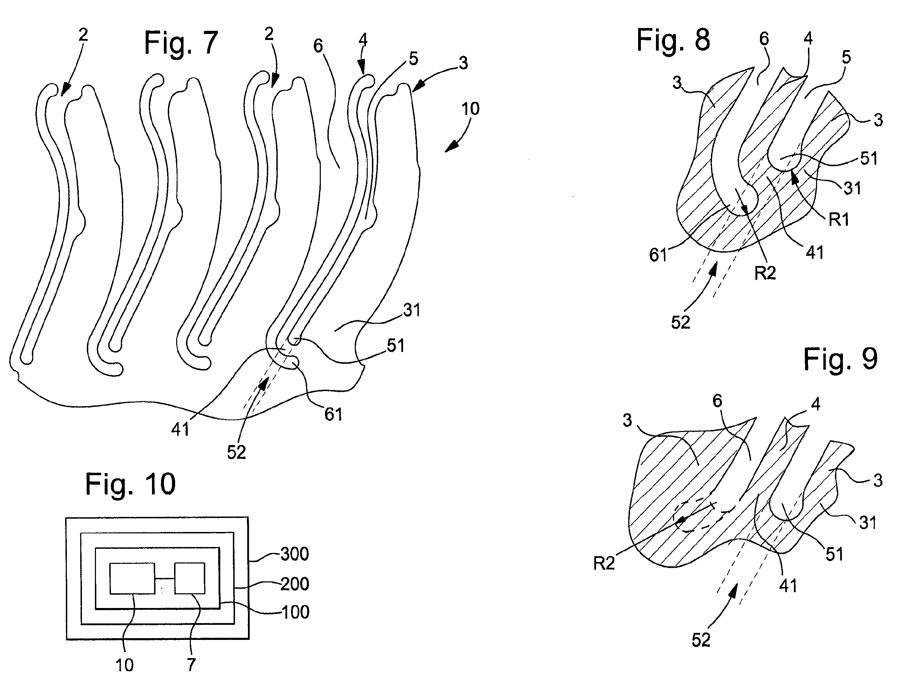

Les figures 2 et 8 illustrent les extrémités internes 51 et 61 des encoches ventrale 5 et dorsale 6, qui sont rayonnées avec des rayons de valeur respectives R1 et R2, qui sont nécessairement l'un et l'autre supérieurs aux valeurs Rmin1 et Rmin2.

La rigidité de chaque partie d'une dent 2, dans une hypothèse simplificatrice où la planche est d'épaisseur constante, dépend essentiellement de la longueur et de la largeur de la partie concernée. Dans l'exécution particulière des figures 1 et 2, la longueur de l'ergot 3, depuis son pied d'ergot 31, et celle de la lame 4, depuis son pied de lame 41, sont similaires. On peut simplifier en exposant que le cube de la largeur détermine la force nécessaire pour obtenir une déflection donnée en bout de la lame ou de l'ergot. Par exemple, si le rapport de la largeur de l'ergot LE à celle de la lame LL est de quatre, le rapport des forces est de 64.

En fonctionnement normal, où le couple à vaincre est quasiment nul, la partie rigide constituée par l'ergot 3 ne subit aucune déformation notable. Pour l'obtention d'un jeu nul, les parties flexibles constituées par les lames 4 doivent fléchir, et c'est ce fléchissement qui est associé à la prise de couple associée à l'engrènement. Lors d'un choc, la situation est très différente, puisque la partie rigide constituée par l'ergot fléchit appréciablement, et c'est là que sa rigidité effective est cruciale pour la tenue au choc; les lames 4 ont une contribution négligeable à la résistance mécanique. Toutefois, si ces lames 4 sont prises en sandwich entre une dent 71 d'un pignon antagoniste 7 et un ergot rigide 3, leur déformation doit être limitée pour prévenir leur casse. A cet effet, avantageusement l'ergot 3 a un profil d'intrados 36 qui est similaire au profil d'extrados 42 de la lame 4, et un profil d'extrados 37 qui est similaire au profil d'intrados 43 de la lame 4, tel que visible sur la figure 2. Le relatif parallélisme sous contrainte entre les profils externes d'ergot et de lame apporte à la roue 10 une meilleure stabilité lors des chocs que les roues flexibles existantes.

La largeur LL des lames 4 est conditionnée par le facteur d'aspect. Et, dans le cas préféré où toutes les dents 2 d'une même roue 10 sont jointives, tel que visible sur la figure 1, la largeur de l'encoche dorsale 6 est limitée par la répartition périphérique des dents 2 sur la roue. Sur les figures 1 et 2 est illustrée une variante particulière, où la largeur LL de la lame 4 est constante depuis le pied de lame 41 jusqu'à son extrémité distale 47, où la lame 4 est simplement rayonnée, d'un rayon supérieur ou égal à Rmin2. La largeur de l'encoche dorsale 6, à l'état libre sans contrainte, est voisine, ou égale, à celle de la lame 4.

Il se pose donc le problème de la localisation relative de ces extrémités 51 et 61, qui doivent procurer une flexibilité suffisante à la lame 4, une répartition correcte des efforts appliquées par un rouage 100, auquel appartient la roue 10 concernée, sur cette lame 4 (ou inversement), sans pour autant affaiblir l'ergot 3 plus que nécessaire: selon l'invention, les positions des extrémités internes 51 et 61 des encoches ventrale 5 et dorsale 6 sont dimensionnées et positionnées de façon à ce que l'ergot 3 ait une déformation minimale en service normal, et qu'il puisse être fléchi uniquement en cas de réception d'un effort appliqué très supérieur à la normale, notamment en cas de choc.

La largeur LE, dans le plan de la roue 10, de l'ergot 3 au niveau de son pied d'ergot 31, est supérieure à trois fois, et de préférence supérieure à six fois la largeur LL correspondante de la lame 4 au niveau de son pied de lame 41. Dans la variante des figures 1 et 2, l'ergot 3 a une largeur qui évolue peu sur sa longueur, et qui, dans la zone de contact, au niveau d'une partie dite externe 34 de cet ergot 3, avec un pignon 7 antagoniste dans un rouage 100 auquel est incorporée la roue 10, est encore supérieure à cinq fois la largeur correspondante de la lame 4 au niveau d'une zone d'inflexion 48 qu'elle comporte, et qui constitue sa zone de contact préférée avec un tel pignon 7.

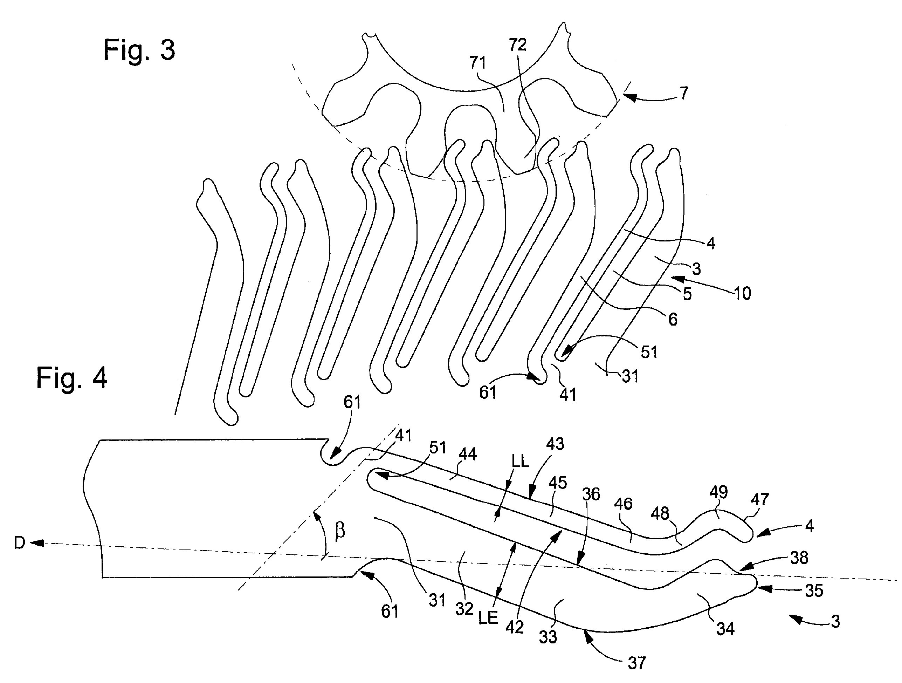

Naturellement, d'autres variantes de réalisation, telle celle de la figure 3, peuvent comporter une largeur dégressive de l'ergot 3, depuis son pied 31 vers son extrémité distale 35. L'important est que l'ergot 3 possède une largeur importante à sa base, au niveau du pied d'ergot 3, car cette zone voit les contraintes les plus importantes lors d'un choc.

Le positionnement des extrémités 51 et 61 sur une même valeur de rayon par rapport à l'axe de pivotement D est à éviter, car il donnerait trop de flexibilité, aussi bien à l'ergot 3 qu'à la lame 4: la section de la lame 4 ne correspondrait plus au rapport d'aspect et la lame 4 ne peut plus être fabriquée, et l'ergot 3 serait trop flexible, c'est-à-dire qu'il aurait une flexibilité en marche normale, qui n'est pas souhaitée pour le maintien du bon rendement. Il est donc préférable que la distance entre l'extrémité 51 de l'encoche ventrale 5, et l'axe de pivotement D, soit différente de la distance entre l'extrémité 61 de l'encoche dorsale 6, et ce même axe D.

De la même façon, la confection d'un rayon d'extrémité R1 ou R2 dans l'axe de symétrie de l'encoche ventrale 5 ou dorsale 6 à son pied 51 ou 61, n'est pas favorable quant à la section restante de la lame 4. De ce fait, il est préférable, et surtout quand le rayon d'extrémité est supérieur à la demi-largeur de l'encoche concernée à son extrémité interne, que ce rayon d'extrémité soit déporté latéralement par rapport à l'axe de l'encoche à son extrémité interne.

Le déport du rayon d'extrémité R1 de l'encoche ventrale 5 ne peut être effectué du côté de la lame 4, en raison de la contrainte de limite imposée par le rapport d'aspect. Il ne peut donc être effectué que du côté de l'ergot 3, tel que visible sur la réalisation préférée de la figure 2.

Le déport du rayon d'extrémité R2 de l'encoche dorsale 6 ne peut pas davantage être effectué du côté de la lame 4, en raison de la contrainte de limite imposée par le rapport d'aspect. Il ne peut donc être effectué que du côté de l'ergot 3, tel que visible sur la réalisation préférée de la figure 2. Mais il est nécessaire de maintenir la rigidité de l'ergot 3 en fonctionnement d'engrènement normal, et de ce fait il n'est pas souhaitable de créer localement une trop grande faiblesse du pied d'ergot 31. C'est pourquoi, selon l'invention, le rayon R2 est positionné « sous » le rayon R1, c'est-à-dire plus près de l'axe de pivotement D que le rayon R1. On diminue ainsi l'affaiblissement de l'ergot 3. De plus, l'éventuel impact, ramené au fond de l'encoche dorsale 6 a alors un effet selon une direction sensiblement radiale, et alors en pleine matière.

En somme, le pied 31 de l'ergot 3 est affaibli, d'une part au niveau du rayon R1 à l'extrémité interne 51 de l'encoche ventrale 5, et d'autre part au niveau du rayon R2 de l'extrémité interne 61 de l'encoche dorsale 6, laquelle est située plus près de l'axe D que l'extrémité 51. Cet affaiblissement progressif permet de maintenir la résistance de l'ergot 3 en marche normale, et donc d'assurer le bon rendement du rouage, tout en lui procurant une souplesse tout juste suffisante en cas de choc. Tout particulièrement, dans un cas de figure usuel, le rouage support une grande aiguille de seconde, de balourd important : l'affaiblissement du pied d'ergot 31 selon l'invention permet de résister à un choc usuel, tel une chute de la pièce d'horlogerie, selon les valeurs d'expérimentation usuelles, non détaillées ici.

Le passage de l'encoche dorsale 6 sous l'encoche ventrale 5 permet, toutes choses égales par ailleurs, d'allonger la longueur active de la lame 4, sans trop affaiblir l'ergot 3.

Ce positionnement relatif des rayons R1 et R2 permet, encore, de créer des conditions d'encastrement de la lame 4, au niveau de son pied de lame 41, de façon oblique, sous un angle β par rapport à la radiale issue de l'axe de pivotement D et passant par le pied de lame 41.

Ainsi, quand la lame 4 flexible fléchit, sa partie interne 44 tend à pivoter autour du pied de lame 41, et l'extrémité distale 47 subit presque une rotation autour d'un point situé environ au tiers de la longueur de la lame 4, entre la partie interne 4 et la zone médiane 45, et une fois que cette rotation est appliquée, les profils 36 d'intrados de l'ergot 3 et 42 d'intrados de la lame 4 sont, de préférence, sensiblement parallèles l'un à l'autre.

Dans une réalisation particulière, tel que représenté sur les figures, chaque dent 2 est séparée de sa voisine par une encoche dorsale 6.

Dans une réalisation particulière, tel que représenté sur les figures, chaque dent 2 comporte un tel ergot 3 et une telle lame 4. Une réalisation avec davantage de composants est théoriquement possible, mais la largeur des composants est limitée par le procédé d'obtention et le respect du rapport d'aspect, et la conception d'une dent 2 à deux composants seulement, ergot 3 et lame 4, permet une réalisation optimale, ainsi qu'une résistance suffisante de ces composants.

Dans une réalisation particulière, tel que représenté sur les figures, l'encoche dorsale 6 s'étend entre l'ergot 3 d'une dent 2, et la lame 4 de la dent 2 adjacente à la précédente.

Dans une réalisation particulière illustrée en particulier par la figure 1, l'encoche ventrale 5 est à bords sensiblement parallèles, et l'ergot 3 comporte, entre le pied d'ergot 31 et une zone médiane 33, une partie interne 32 sensiblement rectiligne faisant un angle αE compris entre 10° et 30°, préférablement entre 15° et 20°, avec une radiale issue de l'axe de pivotement D. Cet ergot 3 comporte encore, entre la zone médiane 33 et son extrémité distale 35 la plus éloignée de l'axe de pivotement D, une partie externe 34 s'étendant sensiblement radialement par rapport à l'axe de pivotement D.

De façon similaire, la lame 4 comporte, entre le pied de lame 41 et une zone médiane 45, une partie interne 44 sensiblement rectiligne faisant un angle αL compris entre 10° et 30°, préférablement entre 15° et 20°, avec une radiale issue de l'axe de pivotement D, et, entre la zone médiane 45 et son extrémité distale 47 la plus éloignée de l'axe de pivotement D, une partie externe 46 s'étendant sensiblement radialement par rapport à l'axe de pivotement D.

Cet angle αL permet, quand un pignon 7 ou une roue antagoniste de la roue 10 exerce un effort d'appui sur l'extrémité distale 47 de la lame 4, d'augmenter le bras de levier par rapport au pied 41 de la lame 4. Sur la figure 2, une flèche symbolise l'effort appliqué par une dent du pignon rigide 7 sur la lame flexible 4 t, et un double trait fait apparaître le bras de levier sur lequel s'exerce ainsi cette force de poussée.

De préférence, les angles αE et αL sont de valeur voisine, ou égaux; en particulier une valeur de 15° donne de bons résultats.

Dans les réalisations particulières des figures 2 et 8, l'extrémité interne 51 de l'encoche ventrale 5 est rayonnée avec un premier rayon R1. Et l'extrémité interne 61 de l'encoche dorsale 6 est rayonnée avec un deuxième rayon R2 de valeur plus importante que celle du premier rayon R1. De préférence l'encoche dorsale 6 a un profil qui suit, à proximité de son extrémité interne 61, un troisième rayon R3 de valeur plus importante que celle du deuxième rayon R2, de façon à faire passer l'encoche dorsale 6 entre l'axe de pivotement D et l'extrémité interne 51 de l'encoche ventrale 5.

Dans la variante illustrée par la figure 1, la lame 4 comporte, entre le pied de lame 41 et une zone médiane 45, une partie interne 44 sensiblement rectiligne faisant un angle αL compris entre 10° et 30° avec une radiale issue de l'axe de pivotement D. La lame 4 comporte encore, entre la zone médiane 45 et son extrémité distale 47 la plus éloignée de l'axe de pivotement D, une partie externe 46 s'étendant sensiblement radialement par rapport à cet axe de pivotement D, jusqu'à une zone d'inflexion 48 entre une partie concave définie par la partie interne 44 et la partie externe 46 d'une part, et une partie convexe 49 d'autre part jusqu'à l'extrémité distale 47. Cette partie convexe 49 est agencée pour venir coopérer en appui de butée sur une extrémité distale 35 de l'ergot 3.

L'invention offre, encore, l'avantage d'être peu sensible à des variations d'entraxe entre l'axe de pivotement D de la roue 10 et l'axe de pivotement ΩPR d'un pignon 7 antagoniste.

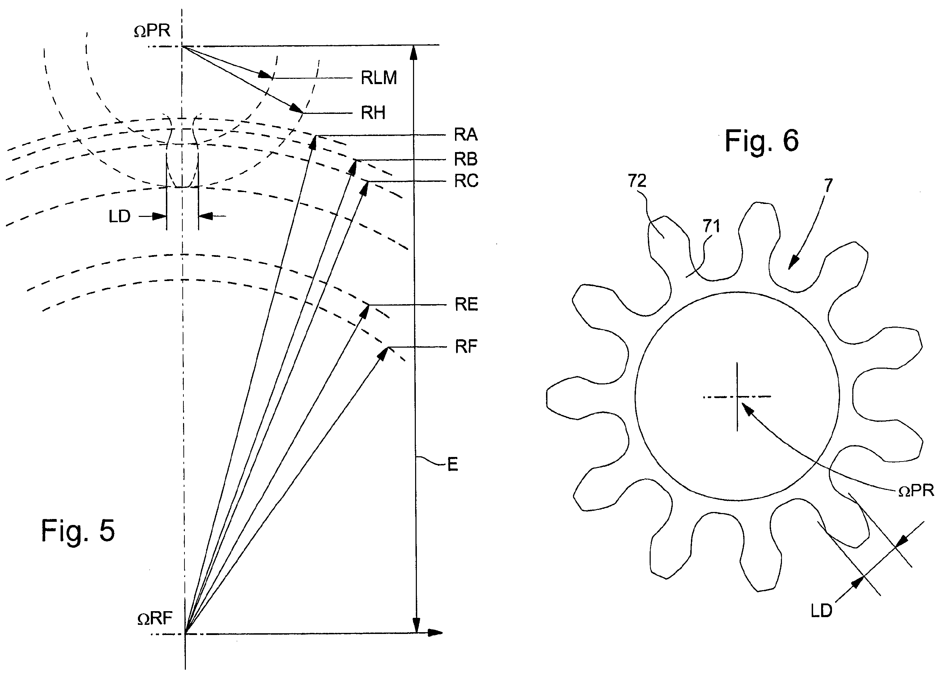

Par exemple, dans une réalisation en NiP élaborée selon le procédé « LIGA » (ultraviolet) avec un module d'élasticité d'environ 90 GPa, telle qu'illustrée par les figures 1, 2, et 5, la planche a une épaisseur comprise entre 0,10 mm et 0,18 mm.

La variante illustrée aux figures 3 et 4 est conçue selon les mêmes lignes directrices que celle de la figure 1, et pour rapprocher au maximum le rapport d'aspect de la valeur 5. La prise de couple et la résistance aux chocs de ces deux variantes sont similaires. Pour satisfaire à ces critères, la variante de la figure 3 comporte 90 dents, quand celle de la figure 1 en comporte 99, et l'épaisseur de la variante de la figure 3 est de 0,12 mm, quand celle de la figure 1 est de 0,15 mm. La profondeur et la pente des encoches ventrale et dorsale sont optimisées pour obtenir un bon comportement, à la fois en engrènement normal, et aux chocs. Dans cette variante de la figure 3, les parties internes 44 et 32 de la lame 4 et de l'ergot 3 sont sensiblement linéaires depuis les pieds respectifs 41 et 31, tandis que la lame 4 et l'ergot 3 de la variante de la figure 1 ont un profil plus proche d'un arc de cercle ou de parabole, dans leurs parties internes 44 et 32, se poursuivant dans leurs parties médianes 45 et 33. Le choix d'un rapport d'aspect de 5,5 pour la variante de la figure 3 est compatible avec une fabrication de série, et, dans le cas d'espèce est utilisé avec une planche d'épaisseur 0,12 mm.

Pour préciser, à titre d'exemple non limitatif et validé par l'expérimentation, la géométrie de la variante des figures 1 et 2, la valeur d'entraxe E est de 2,78 mm et admet une variation de +/- 0,03 mm. Le pignon rigide 7 de 11 dents a un module de 0,052, sa largeur de dent maxi LD est de 0,073 mm sur un rayon de 0,286 mm, et le rayon maximal RH de ce pignon est de 0,35 mm. La roue 10 de 99 dents a un rayon maximal de la lame 4 RA de 2,64 mm, un rayon maximal de l'ergot 3 RB de 2,63 mm, un rayon d'engrènement RC de 2,574 mm, un rayon d'extrémité d'encoche ventrale RE de 2,23 mm, et un rayon d'extrémité d'encoche dorsale RF de 2,19 mm. La largeur LE de l'ergot 3 est de 0,070 mm, la largeur LL de la lame 4 est de 0,022 mm. Le rayon de la lame 4 au niveau de sa zone d'inflexion 48 est de 0,062 mm, cette lame 4 possède encore à son extrémité distale 47 un rayon concave de 0,020 mm agencé pour prendre appui sur l'extrémité distale 35 de l'ergot 3.

Les résultats attendus sont atteints avec une telle géométrie :
- l'engrènement reste sans jeu avec un entraxe augmenté de 0,03 mm ou diminué de 0,03 mm par rapport à la valeur nominale. Le pignon 7 est ainsi toujours en contact avec la planche de la roue 10, quel que soit leur sens de pivotement respectif : soit on arme une lame flexible 4, soit on fait tourner la planche , le contact se faisant alors au niveau de l'ergot 3 ;
- la prise de couple moyenne n'excède pas 5% du couple du barillet rapporté sur la planche, même avec l'entraxe à sa valeur la plus basse. Les lames 4 fléchissent et frottent sur les dents 71 du pignon 7, et consomment ce couple ;
- la partie la plus rigide de chaque dent, constituée par l'ergot 3 ne se brise pas quand, lors d'un choc, le balourd d'une aiguille portée par le pignon, notamment une petite seconde, exerce un couple sur la planche. Les contraintes en traction ne dépassent jamais la limite élastique du Nip, soit 17000 MPa environ.

L'inclinaison des pieds 31 et 41 des ergots 3 et des lames 4 permet d'obtenir une grande longueur de la partie flexible de la lame 4, ce qui est favorable pour diminuer la prise de couple. Elle évite, encore, qu'à l'entraxe minimal, la dent 71 du pignon 7 n'entre en contact avec l'extrémité distale 3 des ergots 3 en situation de quasi-arc-boutement, ce qui serait très défavorable.

L'invention concerne encore un rouage d'horlogerie 100 comportant au moins une telle roue 10 coopérant en engrènement avec un pignon antagoniste 7, dont les dents 71 comportent une zone de section maximale 72 agencée pour coopérer en appui d'entraînement avec une partie externe, sensiblement radiale par rapport à l'axe de pivotement D de la roue 10, d'un ergot 3 ou d'une lame 4 de cette roue 10, tel que visible sur la figure 2.

Une application préférée est l'obtention d'un engrenage horloger sans jeu. Un application particulière est celle de petits compteurs, telle une petite seconde, qui ne sont pas tendus dans le rouage, et qui sont libres de bouger dans le jeu des engrenage. L'invention évite alors une stabilisation par friction, ressort ou aimant, pour effectuer la stabilisation d'une aiguille flottante.

Dans une réalisation préférée, la zone de section maximale 72 coopère avec la roue 10 au niveau d'un rayon correspondant à celui de la zone d'inflexion 48 de la lame 4.

L'invention concerne encore un mouvement d'horlogerie 200 comportant au moins un tel rouage 100.

L'invention concerne encore une pièce d'horlogerie 300 comportant au moins un tel mouvement d'horlogerie 200, ou/et au moins un tel rouage 100.

## Revendications

1. Roue (10) d'horlogerie comportant des dents (2) à rattrapage de jeu comportant chacune un ergot (3) saillant d'un pied d'ergot (31), et une lame élastique (4) saillante d'un pied de lame (41) en regard dudit ergot (3) dont elle est séparée par une encoche ventrale (5), un profil d'intrados (43) de ladite lame du côté opposé audit ergot (3) délimitant une encoche dorsale (6), ledit pied de lame (41) étant délimité, vers l'axe de pivotement (D) de ladite roue (10), par une extrémité interne (51) de ladite encoche ventrale (5) et par une extrémité interne (61) de ladite encoche dorsale (6), **caractérisée en ce que** ladite extrémité interne (61) de ladite encoche dorsale (6) est située plus près dudit axe (D) que ladite extrémité interne (51) de ladite encoche ventrale (5), et s'étend, du côté dudit axe (D), sous ledit pied d'ergot (31) ou sous le prolongement géométrique interne (52) de ladite encoche ventrale (5) vers ledit axe de pivotement (D).

2. Roue (10) pour mécanisme d'horlogerie selon la revendication précédente, **caractérisé en ce que** chaque dite dent (2) est séparée de sa voisine par ladite encoche dorsale (6).

3. Roue (10) pour mécanisme d'horlogerie selon l'une des revendications précédentes, **caractérisé en ce que** ladite encoche dorsale (6) s'étend entre ledit ergot (3) et ladite lame (4).

4. Roue (10) pour mécanisme d'horlogerie selon une des revendications précédentes, **caractérisé en ce que** ladite encoche ventrale (5) est à bords sensiblement parallèles, et **en ce que** ledit ergot (3) comporte, entre ledit pied d'ergot (31) et une zone médiane (33), une partie interne (32) sensiblement rectiligne faisant un angle (αE) compris entre 10° et 30° avec une radiale issue dudit axe de pivotement (D), et, entre ladite zone médiane (33) et son extrémité distale (35) la plus éloignée dudit axe de pivotement (D), une partie externe (34) s'étendant sensiblement radialement par rapport audit axe de pivotement (D), et **en ce que** ladite lame (4) comporte, entre ledit pied de lame (41) et une zone médiane (45), une partie interne (44) sensiblement rectiligne faisant un angle (αL) compris entre 10° et 30° avec une radiale issue dudit axe de pivotement (D), et, entre ladite zone médiane (45) et son extrémité distale (47) la plus éloignée dudit axe de pivotement (D), une partie externe (46) s'étendant sensiblement radialement par rapport audit axe de pivotement (D), ledit angle (αL) permettant, quand un pignon ou une roue antagoniste de ladite roue (10) exerce un effort d'appui sur ladite extrémité distale (47) de ladite lame (4), d'augmenter le bras de levier par rapport audit pied (41) de ladite lame (4).

5. Roue (10) pour mécanisme d'horlogerie selon une des revendications précédentes, **caractérisé en ce que** ladite extrémité interne (51) de ladite encoche ventrale (5) est rayonnée avec un premier rayon (R1), et que ladite extrémité interne (61) de ladite encoche dorsale (6) est rayonnée avec un deuxième rayon (R2) de valeur plus importante que celle dudit premier rayon (R1), et **en ce que** ladite encoche dorsale (6), à proximité de sa dite extrémité interne (61), a un profil qui suit un troisième rayon (R3) de valeur plus importante que celle dudit deuxième rayon (R2), de façon à faire passer ladite encoche dorsale (6) entre ledit axe de pivotement (D) et ladite extrémité interne (51) de ladite encoche ventrale (5).

6. Roue (10) pour mécanisme d'horlogerie selon une des revendications précédentes, **caractérisé en ce que** ladite lame (4) comporte, entre ledit pied de lame (41) et une zone médiane (45), une partie interne (44) sensiblement rectiligne faisant un angle (αL) compris entre 10° et 30° avec une radiale issue dudit axe de pivotement (D), et, entre ladite zone médiane (45) et son extrémité distale (47) la plus éloignée dudit axe de pivotement (D), une partie externe (46) s'étendant sensiblement radialement par rapport audit axe de pivotement (D), jusqu'à une zone d'inflexion (48) entre une partie concave définie par ladite partie interne (44) et ladite partie externe (46) d'une part, et une partie convexe (49) d'autre part jusqu'à ladite extrémité distale (47), ladite partie convexe (49) étant agencée pour venir coopérer en appui de butée sur une extrémité distale (35) dudit ergot (3).

7. Rouage d'horlogerie (100) comportant au moins une roue (10) selon l'une des revendications précédentes, **caractérisé en ce que** ladite roue (10) coopère en engrènement avec un pignon antagoniste (7) dont les dents (71) comportent une zone de section maximale (72) agencée pour coopérer en appui d'entraînement avec une partie externe, sensiblement radiale par rapport audit axe de pivotement (D) de ladite roue (10), d'un dit ergot (3) ou d'une dite lame (4).

8. Rouage d'horlogerie (100) selon les revendications 6 et 7, **caractérisé en ce que** ladite zone de section maximale (72) coopère avec ladite roue (10) au niveau d'un rayon correspondant à celui de ladite zone d'inflexion (48).

9. Mouvement d'horlogerie (200) comportant au moins un rouage (100) selon la revendication 7 ou 8.

10. Pièce d'horlogerie (300) comportant au moins un mouvement d'horlogerie (200) selon la revendication 9, ou/et au moins un rouage (100) selon la revendication 7 ou 8.

## Patentansprüche

1. Uhrenrad (10), das nachstellbare Zähne (2) umfasst, wovon jeder einen von einem Spornfuß (31) vorstehenden Sporn (3) und eine von einem Zungenfuß (41) vorstehende elastische Zunge (4) gegenüber dem Sporn (3), von dem sie durch eine ventrale Kerbe (5) getrennt ist, aufweist, wobei das Profil einer inneren Bogenfläche (43) der Zunge auf der dem Sporn (3) gegenüberliegenden Seite eine dorsale Kerbe (6) begrenzt, wobei der Zungenfuß (41) in Richtung zur Drehachse (D) des Rades (10) durch ein inneres Ende (51) der ventralen Kerbe (5) und durch ein inneres Ende (61) der dorsalen Kerbe (6) begrenzt ist, **dadurch gekennzeichnet, dass** sich das innere Ende (61) der dorsalen Kerbe (6) näher bei der Achse (D) als das innere Ende (51) der ventralen Kerbe (5) befindet und sich in Richtung auf die Achse (D) unter dem Spornfuß (31) oder unter der inneren geometrischen Verlängerung (52) der ventralen Kerbe (5) zu der Drehachse (D) erstreckt.

2. Rad (10) für einen Uhrenmechanismus nach dem vorhergehenden Anspruch, **dadurch gekennzeichnet, dass** jeder Zahn (2) von seinem Nachbarn durch die dorsale Kerbe (6) getrennt ist.

3. Rad (10) für einen Uhrenmechanismus nach einem der vorhergehenden Ansprüche, **dadurch gekennzeichnet, dass** sich die dorsale Kerbe (6) zwischen dem Sporn (3) und der Zunge (4) erstreckt.

4. Rad (10) für einen Uhrenmechanismus nach einem der vorhergehenden Ansprüche, **dadurch gekennzeichnet, dass** die ventrale Kerbe (5) im Wesentlichen parallele Ränder besitzt und dass der Sporn (3) zwischen dem Spornfuß (31) und einem mittleren Bereich (33) einen im Wesentlichen geradlinigen inneren Teil (32), der mit einem von der Drehachse (D) ausgehenden Radius einen Winkel (αE) zwischen 10° und 30° bildet, und zwischen dem mittleren Bereich (33) und seinem distalen Ende (35), das von der Drehachse (D) am weitesten entfernt ist, einen äußeren Teil (34), der sich im Wesentlichen radial in Bezug auf die Drehachse (D) erstreckt, aufweist und dadurch, dass die Zunge (4) zwischen dem Zungenfuß (41) und einem mittleren Bereich (45) einen im Wesentlichen geradlinigen inneren Teil (44), der mit einem von der Drehachse (D) ausgehenden Radius einen Winkel (αL) zwischen 10° und 30° bildet, und zwischen dem mittleren Bereich (45) und seinem distalen Ende (47), das von der Drehachse (D) am weitesten entfernt ist, einen äußeren Teil (46), der sich im Wesentlichen radial in Bezug auf die Drehachse (D) erstreckt, aufweist, wobei der Winkel (αL) dann, wenn ein Ritzel oder ein Gegenrad des Rades (10) auf das distale Ende (47) der Zunge (4) eine Druckkraft ausübt, ermöglicht, den Hebelarm in Bezug auf den Fuß (41) der Zunge (4) zu vergrößern.

5. Rad (10) für einen Uhrenmechanismus nach einem der vorhergehenden Ansprüche, **dadurch gekennzeichnet, dass** das innere Ende (51) der ventralen Kerbe (5) mit einem ersten Radius (R1) ausgebildet ist und dass das innere Ende (61) der dorsalen Kerbe (6) mit einem zweiten Radius (R2) mit einem Wert, der größer als jener des ersten Radius (R1) ist, ausgebildet ist und dass die dorsale Kerbe (6) in der Nähe ihres inneren Endes (61) ein Profil besitzt, das einem dritten Radius (R3) folgt, dessen Wert größer als jener des zweiten Radius (R2) ist, derart, dass die dorsale Kerbe (6) zwischen der Drehachse (D) und dem inneren Ende (51) der ventralen Kerbe (5) verläuft.

6. Rad (10) für einen Uhrenmechanismus nach einem der vorhergehenden Ansprüche, **dadurch gekennzeichnet, dass** die Zunge (4) zwischen dem Zungenfuß (41) und einem mittleren Bereich (45) einen im Wesentlichen geradlinigen inneren Teil (44), der mit einem von der Drehachse (D) ausgehenden Radius einen Winkel (αL) zwischen 10° und 30° bildet, und zwischen dem mittleren Bereich (45) und seinem distalen Ende (47), das von der Drehachse (D) am weitesten entfernt ist, einen äußeren Teil (46), der sich im Wesentlichen radial in Bezug auf die Drehachse (D) bis zu einem Wendebereich (48) zwischen einerseits einem konkaven Teil, der durch den inneren Teil (44) und den äußeren Teil (46) definiert ist, und andererseits einem konvexen Teil (49) bis zu dem distalen Ende (47) erstreckt, aufweist, wobei der konvexe Teil (49) dafür ausgelegt ist, anliegend an einem distalen Ende (35) des Sporns (3) mit diesem abstützend zusammenzuwirken.

7. Uhrenräderwerk (100), das wenigstens ein Rad (10) nach einem der vorhergehenden Ansprüche umfasst, **dadurch gekennzeichnet, dass** das Rad (10) mit einem Gegenritzel (7) kämmend in Eingriff steht, dessen Zähne (71) einen Bereich (72) mit maximalem Querschnitt aufweisen, der dafür ausgelegt ist, in einer Antriebsabstützung mit einem äußeren Teil eines Sporns (3) oder einer Zunge (4) zusammenzuwirken, der in Bezug auf die Drehachse (D) des Rades (10) im Wesentlichen radial ist.

8. Uhrenräderwerk (100) nach den Ansprüchen 6 und 7, **dadurch gekennzeichnet, dass** der Bereich (72) mit maximalem Querschnitt mit dem Rad (10) auf Höhe eines Radius zusammenwirkt, der jenem des Wendebereichs (48) entspricht.

9. Uhrwerk (200), das wenigstens ein Räderwerk (100) nach Anspruch 7 oder 8 umfasst.

10. Zeitmessgerät (300), das wenigstens ein Uhrwerk (200) nach Anspruch 9 und/oder wenigstens ein Räderwerk (100) nach Anspruch 7 oder 8 umfasst.

## Claims

1. Timepiece wheel (10) comprising teeth (2) with play compensation each including a catch (3) projecting from a catch foot (31), and an elastic strip (4) projecting from a strip foot (41) opposite said catch (3) from which said strip is separated by a ventral notch (5), an intrados profile (43) of said strip, on the side opposite said catch (3), delimiting a dorsal notch (6), said strip foot (41) being delimited, towards the pivot axis (D) of said wheel (10), by an inner end (51) of said ventral notch (5) and by an inner end (61) of said dorsal notch (6), **characterized in that** said inner end (61) of said dorsal notch (6) is located closer to said axis (D) than said inner end (51) of said ventral notch (5), and extends, on the side of said axis (D), underneath said catch foot (31) or underneath the inner geometrical extension (52) of said ventral notch (5) towards said pivot axis (D).

2. Wheel (10) for a timepiece mechanism according to the preceding claim, **characterized in that** each said tooth (2) is separated from the next tooth by said dorsal notch (6).

3. Wheel (10) for a timepiece mechanism according to any of the preceding claims, **characterized in that** said dorsal notch (6) extends between said catch (3) and said strip (4).

4. Wheel (10) for a timepiece mechanism according to any of the preceding claims, **characterized in that** said ventral notch (5) has substantially parallel edges, and **in that**, between said catch foot (31) and a median area (33), said catch (3) includes a substantially rectilinear inner portion (32) forming an angle (αE) comprised between 10° and 30° with a radial line originating from said pivot axis (D), and, between said median area (33) and the distal end (35) thereof farthest from said pivot axis (D), an outer portion (34) extending substantially radially relative to said pivot axis (D), and **in that**, between said strip foot (41) and a median area (45), said strip (4) includes a substantially rectilinear inner portion (44) forming an angle (αL) comprised between 10° and 30° with a radial line originating from said pivot axis (D), and between said median area (45) and the distal end (47) thereof farthest from said pivot axis (D), an outer portion (46) extending substantially radially relative to said pivot axis (D), said angle (αL) allowing the lever arm to be increased relative to said foot (41) of said strip (4) when an opposing wheel or pinion of said wheel (10) exerts a pressing stress on said distal end (47) of said strip (4).

5. Wheel (10) for a timepiece mechanism according to any of the preceding claims, **characterized in that** said inner end (51) of said ventral notch (5) is curved at a first radius (R1), and **in that** said inner end (61) of said dorsal notch (6) is curved at a second radius (R2) of higher value than that of said first radius (R1), and **in that**, in proximity to said inner end (61) thereof, said dorsal notch (6) has a profile which follows a third radius (R3) of higher value than that of said second radius (R2), so as to cause said dorsal notch (6) to pass between said pivot axis (D) and said inner end (51) of said ventral notch (5).

6. Wheel (10) for a timepiece mechanism according to any of the preceding claims, **characterized in that** between said strip foot (41) and a median area (45), said strip (4) includes a substantially rectilinear inner portion (44) forming an angle (αL) comprised between 10° and 30° with a radial line originating from said pivot axis (D) and, between said median area (45) and the distal end (47) thereof farthest from said pivot axis (D), an outer portion (46) extending substantially radially relative to said pivot axis (D), as far as an inflection area (48) between a concave portion defined by said inner portion (44) and said outer portion (46), on the one hand, and a convex portion (49), on the other hand, as far as said distal end (47), said convex portion (49) being arranged to cooperate in abutment on a distal end (35) of said catch (3).

7. Timepiece train (100) comprising at least one wheel (10) according to any of the preceding claims, **characterized in that** said wheel (10) is geared with an opposing pinion (7) whose teeth (71) comprise an area of maximum section (72), arranged to cooperate in driving abutment with a substantially radial external portion relative to said pivot axis (D) of said wheel (10), of a said catch (3) or of a said strip (4).

8. Timepiece train (100) according to claims 6 and 7, **characterized in that** said area of maximum section (72) cooperates with said wheel (10) on a radius corresponding to that of said inflection area (48).

9. Timepiece movement (200) including at least one train (100) according to claim 7 or 8.

10. Timepiece (300) including at least one timepiece movement (200) according to claim 9, and/or at least one train (100) according to claim 7 or 8.
